# NEUE EUROPÄISCHE PATENTSCHRIFT

(11) **EP 2 176 105 B2**
(45) Veröffentlichungstag und Bekanntmachung des Hinweises auf die Entscheidung über den Einspruch: **09.03.2016**
(45) Hinweis auf die Patenterteilung: 18.05.2011
(21) Anmeldenummer: 08785436.0
(22) Anmeldetag: 07.08.2008
(51) Int. Cl.: B60T 13/68, B60T 7/08, B60T 17/22, B60T 8/36

(54) **STEUERGERÄT FÜR EINE BREMSANLAGE EINES NUTZFAHRZEUGS UND VERFAHREN ZUM STEUERN EINER BREMSANLAGE**
CONTROL DEVICE FOR A BRAKE SYSTEM OF A UTILITY VEHICLE, AND METHOD FOR CONTROLLING A BRAKE SYSTEM
APPAREIL DE COMMANDE POUR INSTALLATION DE FREINAGE D'UN VÉHICULE UTILITAIRE ET PROCÉDÉ DE COMMANDE D'UNE INSTALLATION DE FREINAGE

(30) Priorität: 08.08.2007 DE 102007037346
(43) Veröffentlichungstag der Anmeldung: 21.04.2010
(73) Patentinhaber: KNORR-BREMSE Systeme für Nutzfahrzeuge GmbH, 80809 München (DE)
(72) Erfinder: HILBERER, Eduard, 68766 Hockenheim (DE)
(74) Vertreter: Schumacher & Willsau
(86) Internationale Anmeldenummer: PCT/EP2008/006530
(87) Internationale Veröffentlichungsnummer: WO 2009/019022

(56) Entgegenhaltungen:
- EP-A- 1 504 975
- EP-A- 1 541 437
- WO-A-2008/025401
- WO-A1-96/30243
- WO-A1-2008/025401
- DE-A1-102005 020 626
- DE-T2- 60 003 310

## Beschreibung

Die Erfindung betrifft ein Steuergerät für eine Bremsanlage eines Nutzfahrzeuges, wobei die Bremsanlage Betriebsbremszylinder und Federspeicherbremszylinder zum Abbremsen des Nutzfahrzeuges, ein elektronisches Steuergerät, Sensoren zum Erfassen des Bewegungszustandes des Nutzfahrzeugs, ein Fußbremsventil zum Betätigen der Betriebsbremse, eine Handsteuereinheit, über die von der Betätigungsart der Handsteuereinheit abhängige Fahrerwünsche an das elektronische Steuergerät übermittelbar sind, ein Modul mit elektrisch ansteuerbaren Ventilen für ein Anti-Blockiersystem und ein Modul mit elektrisch ansteuerbaren Ventilen für eine elektrisch gesteuerte Feststellbremse umfasst, wobei das Modul mit elektrisch ansteuerbaren Ventilen für das Antiblockiersystem und das Modul mit elektrisch ansteuerbaren Ventilen für die elektrisch gesteuerte Feststellbremse mit dem Steuergerät verbunden sind, wobei das elektronische Steuergerät sowohl die Beeinflussung des Antiblockiersystems als auch der elektrisch gesteuerten Feststellbremse übernimmt.

Weiterhin betrifft die Erfindung ein Verfahren zum Steuern einer Bremsanlage für ein mit einem Anhänger koppelbares Nutzfahrzeug, mit Betriebsbremszylindern und Federspeicherbremszylindern zum Abbremsen des Nutzfahrzeugs, einem elektronischen Steuergerät, Sensoren zum Erfassen des Bewegungszustandes des Nutzfahrzeugs, einem Fußbremsventil zum Betätigen der Betriebsbremse, einer Handsteuereinheit, über die von der Betätigungsart der Handsteuereinheit abhängige Fahrerwünsche an das elektronische Steuergerät übermittelt werden, einem Modul mit elektrisch ansteuerbaren Ventilen für ein Antiblockiersystem und einem Modul mit elektrisch ansteuerbaren Ventilen für eine elektrisch gesteuerte Feststellbremse mit einem pneumatischen Steueranschluss, der mit einem Steuereingang eines Anhängersteuermoduls koppelbar ist, wobei die Module mit dem Steuergerät verbunden sind, wobei das elektronische Steuergerät sowohl die Beeinflussung des Antiblockiersystems als auch der elektrisch gesteuerten Feststellbremse übernimmt.

Bremsanlagen für Nutzfahrzeuge unterliegen im Allgemeinen strengen Bestimmungen hinsichtlich Ausfall- und Betriebssicherheit. Besonderes Augenmerk wird dabei üblicherweise auf eine Redundanz der Betriebsbremskreise gelegt, um das Nutzfahrzeug im Defektfall noch sicher zum Halten bringen zu können. Weiterhin soll eine möglichst ausfallsichere Feststellbremse zur Verfügung gestellt werden, um ein unbeabsichtigtes Wegrollen des Nutzfahrzeugs sicher zu verhindern. Weitere teilweise elektronisch gesteuerte Fahrsicherheitssysteme, wie ABS, ESP etc., sind in Abhängigkeit von dem Verwendungszweck der Nutzfahrzeuge mittlerweile üblich. Dadurch kann, insbesondere bei leichten kleinen Nutzfahrzeugen, die Situation entstehen, dass entweder hochintegrierte Komplettlösungen verbaut werden müssen, die die erwünschen Sicherheitsmerkmale bei weitem übertreffen, oder autarke Einzelsysteme verbaut werden, die speziell an die Kundenwünsche für die jeweiligen Nutzfahrzeuge angepasst sind. Ein elektronisches Bremssystem (EBS) stellt eine solche hochintegrierte Sicherheitslösung für ein Nutzfahrzeug dar, die bekannte Fahrsicherheitssysteme, wie ABS, ESP etc., vereinigt. Es wird für alle Achsen eine permanente drucklastabhängige Regelung der Bremswirkung vorgenommen, wobei der Regelkreis sowohl über Drucksensoren als auch über Raddrehzahlsensoren geschlossen wird. Weiterhin erfolgt die Anhängersteuerung, zum Beispiel für eine Streckbremsung, elektrisch.

Sowohl der Einbau eines hochintegrierten Fahrsicherheitssystems als auch die Verwendung autarker Systeme, die dann eventuell nicht alle gewünschten Eigenschaften aufweisen, kann sinnvoll sein. Die Verwendung eines hochintegrierten Fahrsicherheitssystems, das üblicherweise nur in große und schwere Nutzfahrzeuge eingebaut wird und alle Kundenwünsche erfüllen kann, würde im Allgemeinen nicht nur die Kosten für das leichtere Nutzfahrzeug erhöhen. Vielmehr kann auch das Gewicht der kompletten Sicherheitsausrüstung das Gesamtgewicht des leichteren Nutzfahrzeugs signifikant erhöhen und wertvollen Bauraum beanspruchen, da auch nicht benötigte Komponenten verbaut werden müssen. Die Kosten, das Gewicht und der beanspruchte Bauraum sind bei dem schweren Nutzfahrzeug weniger bedeutend, da sie nur einen Bruchteil des Gesamtpreises, des Gesamtgewichts bzw. des verfügbaren Raumes ausmachen. Insbesondere bei leichten Nutzfahrzeugen kann es hingegen erwünscht sein, Gewichts- und Bauraumeinsparungen durch die Verwendung autarker Systeme zu erzielen.

Die EP 1 504 975 B1 beschreibt eine druckmittelbetriebene Bremsanlage für ein Fahrzeug, wobei die Signalübertragung zur Aktivierung der Feststellbremse auf elektrischem Wege erfolgt.

Die EP 1 541 437 A2 beschreibt ein Bremssystem für ein Fahrzeug mit zwei Bremskreisen und einem Zentralsteuergerät für alle Bremskreise, wobei jedem Bremskreis eine Bremskreissteuerung zugeordnet ist, dem jeweils das Zentralsteuergerät übergeordnet ist. Die Bremskreisteuerungen können dabei zur Ansteuerung der Feststellbremse und zur ABS-Regelung eingerichtet sein.

Der Erfindung liegt die Aufgabe zugrunde, die notwendigen Bauteile zur Integration der für ein insbesondere leichtes Nutzfahrzeug erwünschten Fahrsicherheitssysteme zu reduzieren und dadurch die Ausfallsicherheit zu erhöhen. Gleichzeitig sollen möglichst viele der sich bietenden Synergien hinsichtlich der Funktionalität ausgenutzt werden, ohne die Sicherheit des Nutzfahrzeugs negativ zu beeinflussen.

Diese Aufgabe wird mit den Merkmalen der unabhängigen Ansprüche gelöst.

Vorteilhafte Ausführungsformen der Erfindung sind in den abhängigen Ansprüchen angegeben.

Die Erfindung baut auf dem gattungsgemäßen Steuergerät dadurch auf, dass das Modul mit elektrisch ansteuerbaren Ventilen für das Antiblockiersystem und das Modul mit elektrisch ansteuerbaren Ventilen für die elektrisch gesteuerte Feststellbremse zumindest teilweise gemeinsame Druckluftein- und Druckluftausgänge verwenden, dass die Funktion des Antiblockiersystems und die Funktion der elektrischen Feststellbremse getrennt voneinander deaktiviert werden können, dass das Steuergerät Mikrocontroller, einen Watch-Dog-Timer und zwei separate Relais zur getrennten Deaktivierung des Antiblockiersystems und der elektrisch gesteuerten Feststellbremse umfasst, dass das Steuergerät weiterhin einen Schreib- /Lesespeicher umfasst, um zulässige Steuer- und Regelparameter sowie vorgegebene Schwellenwerte zu speichern, und dass der Watch-Dog-Timer dazu eingerichtet ist, eine Watch-Dog-Funktion auszuführen, die die Mikrocontroller überwacht und im Fehlerfall teilweise abschaltet. Durch das Zusammenfassen vorher getrennter Ein- und Ausgänge der einzelnen Fahrsicherheitssysteme können pneumatische Steuerleitungen eingespart werden, die aufwendig zu montieren und fehleranfällig sind. Wenn die Bremsanlage des leichten Nutzfahrzeugs sowohl ein Antiblockiersystem als auch eine elektrisch gesteuerte Feststellbremse besitzt, so kann eine einzelne elektronische Steuereinheit für beide Fahrsicherheitssysteme verwendet werden. Die elektronische Steuereinheit regelt die Steuerung des Antiblockiersystems und steuert zugleich die Funktion der elektrisch gesteuerten Feststellbremse.,Auf diese Weise kann eine elektronische Steuereinheit eingespart werden, die sonst eine zusätzliche Fehlerquelle darstellen könnte. Das so geschaffene Fahrsicherheitssystem ist weiterhin unabhängig von anderen Komponenten in jedes beliebige Nutzfahrzeug integrierbar. Insbesondere ist die Integration eines EBS keine Voraussetzung. Weiterhin kann jetzt das ABS-System im Falle einer Hilfsbremsung direkt durch das gemeinsame Steuergerät auf die Feststellbremse Einfluss nehmen. Die ist vorteilhaft, da nun ein zeitlicher Vorteil gegenüber separaten Systemen entsteht, bei denen das ABS-System nur über den Umweg über den CAN-Bus auf die Feststellbremse Einfluss nehmen kann.

Weiterhin kann vorgesehen sein, dass das Modul mit elektrisch ansteuerbaren Ventilen für das Antiblockiersystem eine Belüftung der Federspeicherbremszylinder teilweise verhindert, falls die Feststellbremse belüftet ist, wobei eine maximale Druckbelastung des Zylinders berücksichtigt wird. Durch diese Maßnahme wird eine Überbelastung der Radbremse verhindert, da andernfalls neben der Federkraft der Feststellbremse auch noch die Belüftung durch die Betriebsbremse die Zylinder belasten würde. Eine solche Funktion kann zum Beispiel durch einen zusätzlichen Elektromagneten, den so genannten "Hold Magneten" realisiert werden, der im ABS-System angeordnet wird.

Nützlicherweise kann vorgesehen sein, dass das Modul mit elektrisch ansteuerbaren Ventilen für das Antiblockiersystem eine Belüftung der Federspeicherbremszylinder durch die Feststellbremse zumindest teilweise verhindert, wenn die Betriebsbremse bereits betätigt ist, wobei eine maximale Druckbelastung des Zylinders berücksichtigt wird. Auch durch diese Maßnahme wird eine Überbelastung der Zylinder vermieden, wobei die an die Zylinder angreifende Kraft auf einem konstanten hohen Niveau gehalten wird.

Um ein sicheres Abstellen des Nutzfahrzeugs zu ermöglichen kann vorgesehen sein, dass die Belüftung der Feststellbremse auch bei belüfteter Betriebsbremse erfolgen kann, wobei eine maximale Druckbelastung des Zylinders berücksichtigt wird. Die Zylinderseite der Feststellbremse werden dabei langsam belüftet, während die Betriebsbremse zwar weiterhin belüftet ist, die zugehörige Zylinderseite jedoch synchron mit dem Belüften der Feststellbremsseite langsam entlüftet wird, um eine Überbelastung des Zylinders vermieden.

Vorteilhafterweise kann vorgesehen sein, dass das Entlüften der Feststellbremse bei gleichzeitig betätigter Betriebsbremse erfolgen kann, wobei eine maximale Druckbelastung des Zylinders berücksichtigt wird. Typisch ist diese Situation während des Anfahrens. Die Funktion verhindert ein Wegrollen das Nutzfahrzeug während der maximal zulässige Zylinderdruck eingehalten wird, wobei die in den Zylinderteilen herrschenden Drücke durch Sensoren bestimmt werden. Die Bremse kann dann nach Erhöhen des Motorantriebsmomentes auf das Niveau des Bremsmomentes freigegeben werden, wobei über den CAN-Bus noch zusätzliches Drehmoment angefordert wird, um ein Wegrollen zu vermeiden. Dabei werden die Raddrehzahlsensoren des ABS-Systems und des Tachographen mitberücksichtigt.

Ferner kann vorgesehen sein, dass das Steuergerät das Modul mit elektrisch ansteuerbaren Ventilen für die elektrisch gesteuerte Feststellbremse so ansteuert, dass bei belüftetem Federspeicherbremszylinder des Nutzfahrzeugs die Steuerleitung zum Anhänger entlüftet wird, um zu testen, ob das Zugfahrzeug den gesamten Zug halten kann.

Weiterhin kann vorgesehen sein, dass über die Handsteuereinheit die Anhängerbremse gelöst werden kann.

Vorteilhafterweise kann vorgesehen sein, dass sich das Steuergerät bei Empfang eines Aufwecksignals in Betriebsbereitschaft versetzen kann. In Betriebsbereitschaft kann die Feststellbremse geöffnet oder geschlossen werden.

Es kann weiterhin vorgesehen sein, dass das ABS-System und die elektrisch gesteuerte Feststellbremse nur bei eingeschalteter Zündung arbeiten.

Alternativ kann vorgesehen sein, dass das ABS-System und die elektrisch gesteuerte Feststellbremse nach dem Einschalten der Zündung den Betrieb aufnehmen und nach dem Ausschalten der Zündung eine oszillatorgesteuerte Nachlaufzeit vergeht, bis das Steuergerät (60) zumindest teilweise deaktiviert wird.

Nützlicherweise ist vorgesehen, dass das Modul mit elektrisch ansteuerbaren Ventilen für das Antiblockiersystem und das Modul mit elektrisch ansteuerbaren Ventilen für die elektrisch gesteuerte Feststellbremse an einem Gehäuse angeordnet sind, welches das gemeinsame elektronische Steuergerät aufnimmt. Durch diese Anordnung werden elektrische Steuerleitungen von dem elektronischen Steuergerät zu den in den beiden Modulen vorhandenen elektrisch ansteuerbaren Ventilen und von den in den Modulen vorhandenen Drucksensoren zu dem elektronischen Steuergerät minimiert. Auf diese Weise wird die Ausfallsicherheit der Fahrsicherheitssysteme weiter erhöht, da wieder die Anzahl fehleranfälliger Bauteile reduziert wird.

Erfindungsgemäß ist vorgesehen, dass die Funktion des Antiblockiersystems und die Funktion der elektrisch gesteuerten Feststellbremse getrennt voneinander deaktiviert werden können. Falls das Antiblockiersystem oder die elektrisch gesteuerte Feststellbremse einen Defekt aufweisen, kann durch die Möglichkeit der getrennten Deaktivierung des fehlerhaften Teilsystems eine Restfunktionalität aufrechterhalten werden. Dadurch wird die Sicherheit des Nutzfahrzeugs gesteigert.

Nützlicherweise ist vorgesehen, dass an dem Modul für die elektrisch gesteuerte Feststellbremse ein pneumatischer Steueranschluss vorgesehen ist, der mit einem Steuereingang eines Anhängersteuermoduls koppelbar ist und dass das elektronische Steuergerät über den pneumatischen Steueranschluss eine Streckbremsfunktion für den Anhänger bereitstellen kann, falls eine solche Streckbremsung angefordert wird. Durch die Streckbremsfunktion wird verhindert, dass der Anhänger eine höhere Geschwindigkeit als das Nutzfahrzeug erreicht, da eine solche Situation letztlich zu einem Einknicken eines aus Nutzfahrzeug und Anhänger bestehenden Fahrzeugzuges und somit zu einer sehr unsicheren Fahrsituation führen könnte. Das Nutzfahrzeug kann auf diese Weise mit einem weiteren Fahrsicherheitsmerkmal ausgerüstet werden, ohne dass zusätzliche aufwendige Baugruppen integriert werden müssen. Vorteilhafterweise sollte der Anhänger dabei mit Raddrehzahlsensoren ausgerüstet und mit dem CAN-Bus verbunden sein. Die Raddrehzahlinformation des Anhängers wird dann an das Steuergerät übertragen und zur Regelung der Streckbremsung verwendet. Der Anhänger wird dann nicht elektrisch, wie bei einem EBS, sondern pneumatisch gesteuert.

Nützlicherweise kann vorgesehen sein, dass eine redundante Spannungsversorgung für das elektronische Steuergerät vorgesehen ist. Eine redundante Spannungsversorgung des Steuergerätes erhöht die Ausfallsicherheit der Fahrsicherheitssysteme, da bei einem Ausfall einer der beiden Spannungsversorgungen des elektronischen Steuergerätes die Funktionalität der Fahrsicherheitssysteme gewahrt bleibt.

Vorteilhafterweise kann vorgesehen sein, dass das elektronische Steuergerät einen Anschluss an ein serielles Bussystem aufweist. Üblicherweise weisen moderne Nutzfahrzeuge eine große Anzahl von Subsystemen auf. Diese Subsysteme werden normalerweise an ein in dem Nutzfahrzeug vorhandenes serielles Bussystem, wie den CAN-Bus, angeschlossen, um untereinander Daten auszutauschen. Beispielsweise könnte ein an das Nutzfahrzeug und den CAN-Bus angeschlossener Anhänger Raddrehzahlsensoren aufweisen, deren die Raddrehzahl der einzelnen Räder des Anhängers betreffende Information über den CAN-Bus an das Steuergerät übertragen werden und zur Regelung einer Streckbremsung angewendet werden könnten. Weiterhin ist denkbar, dass der Ladezustand des Nutzfahrzeuges erfasst wird und bei der Regelung des ABS berücksichtigt wird.

Weiterhin kann vorgesehen sein, dass Fahrzeugsbeschleunigungsmesswerte über das Anschluss an das serielle Bussystem an das Steuergerät übertragen werden.

Vorteilhafterweise kann vorgesehen sein, dass die Sensoren der Bremsanlage zum Erfassen des Bewegungszustandes des Nutzfahrzeuges Gierungssensoren umfassen und dass der Betriebsbremszylinderdruck in Abhängigkeit von der Nutzfahrzeugbeschleunigung um Quer- und Längsachse geregelt wird. Moderne ABS Systeme können auch zusätzliche fahrzeugstabilisierende Funktionen wie Roll-Over-Prevention (RSP), das ist eine Funktion zur Verhinderung des Fahrzeugumkippens, oder eine ESP-Funktion, das ist eine Fahrzeugdynamikregelung zur Vermeidung des Fahrzeugschleuderns, umfassen. Bei diesen Funktionen wird der Bremszylinderdruck in Abhängigkeit der gemessenen Fahrzeugbeschleunigungen um Quer- und Hochachse mitbestimmt. Die Fahrzeugbeschleunigungsmessung erfolgt über die Gierratensensoren und die Messwerte werden dem Steuergerät mitgeteilt. Gierungssensoren erfassen die Drehung des Nutzfahrzeuges um die Nutzfahrzeugachsen. Die Drehung des Nutzfahrzeuges um die Hochachse ist eine wesentliche Information, um eine Kippgefahr des Nutzfahrzeuges zu verringern (RSP). Die zusätzlichen Funktionen können als eine Erweiterung der herkömmlichen ABS-Funktionalität aufgefasst werden. Weiterhin wird bei einer solchen Funktion die Abweichung der mittleren Fahrzeuggeschwindigkeit von der durch Raddrehzahlsensoren ermittelte Geschwindigkeit berücksichtigt.

Nützlicherweise kann vorgesehen sein, dass der Betriebsbremszylinderdruck in Abhängigkeit von mindestens einer der folgenden Größen geregelt wird:
- Feststellbremszylinderdruck
- Feststellbremswertgeberdruck
- Fehlerzustand des Systems
- Status des Fußbremswertgebers
- Nutzfahrzeuggeschwindigkeit und Radgröße

Die Berücksichtigung der oben aufgeführten Systemgrößen bietet weitere Vorteile bei der Umsetzung des erfindungsgemäßen Systems und ermöglicht eine effizientere Systemregelung. Beispielsweise kann eine doppelte Druckbelastung der Feststellbremszylinder durch die Betriebsbremse vermieden werden, wenn ein bereits anliegender Druck berücksichtigt wird und die Radgröße beeinflusst beispielsweise die von den Drehzahlsensoren ermittelte Geschwindigkeit des Nutzfahrzeugs, wobei die Geschwindigkeit des Nutzfahrzeugs beispielsweise die Kippgefahr mitbestimmt.

Weiterhin kann vorgesehen sein, dass der Feststellbremszylinderdruck in Abhängigkeit des Handbremswertgebers geregelt wird. Diese Regelung bietet beispielsweise im Rahmen einer stufbaren Feststellbremse Vorteile.

Ebenfalls kann vorgesehen sein, dass die Bremsanlage die Funktion einer Antischlupfregelung bereitstellt, wobei das elektronische Steuergerät die Regelung der Antischlupfregelung übernimmt. Eine Antischlupfregelung ist letztendlich eng verwandt mit einem Antiblockiersystem und kann daher ohne weitere Bauteile in dem Steuergerät und den daran angeordneten Modulen mit elektrisch ansteuerbaren Ventilen integriert werden.

Die Erfindung baut auf dem gattungsgemäßen Verfahren dadurch auf, dass das Modul mit elektrisch ansteuerbaren Ventilen für das Antiblockiersystem und das Modul mit elektrisch ansteuerbaren Ventilen für die elektrisch gesteuerte Feststellbremse zumindest teilweise gemeinsame Druckluftein- und Druckluftausgänge verwenden, und dass bei einem Defekt des Antiblockiersystems die Funktion des Antiblockiersystems getrennt von der Funktion der elektrisch gesteuerten Feststellbremse deaktiviert wird, und dass bei einem Defekt der elektrisch gesteuerten Feststellbremse die Funktion der elektrisch gesteuerten Feststellbremse getrennt von der Funktion des Antiblockiersystems deaktiviert wird, dass das Steuergerät Mikrocontroller, einen Watch-Dog-Timer und zwei separate Relais zur getrennten Deaktivierung des Antiblockiersystems und der elektrisch gesteuerten Feststellbremse umfasst, dass das Steuergerät weiterhin einen Schreib- /Lesespeicher umfasst, um die zulässigen Steuer- und Regelparameter sowie vorgegebene Schwellenwerte zu speichern, und dass der Watch-Dog-Timer eine Watch-Dog-Funktion ausführt, die die Mikrocontroller überwacht und im Fehlerfall teilweise abschaltet, und dass das elektronische Steuergerät unter Verwendung des Moduls für die elektrisch gesteuerte Feststellbremse und insbesondere des vorhandenen Steueranschlusses eine kontrollierte Steckbremsung einleitet und überwacht, falls eine Streckbremsung angefordert wird. Durch das Zusammenfassen vorher getrennter Ein- und Ausgänge der einzelnen Fahrsicherheitssysteme können pneumatische Steuerleitungen eingespart werden, die aufwendig zu montieren und fehleranfällig sind.

Erfindungsgemäß ist vorgesehen, dass das elektronische Steuergerät unter Verwendung des Moduls für die elektrisch gesteuerte Feststellbremse und insbesondere des vorhandenen Steueranschlusses eine kontrollierte Streckbremsung einleitet und überwacht, falls eine Streckbremsung angefordert wird. Auf diese Weise werden die Vorteile und Besonderheiten der erfindungsgemäßen Bremsanlage auch im Rahmen eines Verfahrens umgesetzt.

Die Erfindung wird nun mit Bezug auf die begleitenden Zeichnungen anhand besonders bevorzugter Ausführungsformen beispielhaft erläutert.

Es zeigen:
- Figur 1: ein vereinfachtes Blockschaltbild eines Steuergerätes und der angeschlossen Module mit elektrisch ansteuerbaren Ventilen, wobei mögliche elektrische und pneumatische Anschlüsse dargestellt sind;
- Figur 2: ein detaillierteres Blockschaltbild des erfindungsgemäßen Steuergerätes und der angeschlossenen Module mit elektrisch ansteuerbaren Ventilen zur Veranschaulichung der möglichen Verwendung gemeinsamer Druckluftausgänge;
- Figur 3: eine mögliche Ausführungsform eines Moduls 64 zur Steuerung der Feststellbremse, die gleichzeitig in der Lage ist eine Streckbremsfunktion bereitzustellen;
- Figur 4: ein Schaltdiagramm eines Teils eines erfindungsgemäßen Bremsanlage zur Veranschaulichung möglicher Ausführungsformen hinsichtlich des Steuergerätes und der Module mit elektrisch ansteuerbaren Ventilen;
- Figur 5: ein Schaltdiagramm eines Teils eines erfindungsgemäßen Bremsanlage zur Veranschaulichung möglicher Ausführungsformen hinsichtlich des Steuergerätes und der Module mit elektrisch ansteuerbaren Ventilen und
- Figur 6: eine schematische Darstellung des Nutzfahrzeuges zur Veranschaulichung der möglichen Positionierung einzelner Bauteile des erfindungsgemäßen Bremssystems.

Bei der nachfolgenden Beschreibung der Zeichnungen bezeichnen gleiche Bezugszeichen gleiche oder vergleichbare Komponenten.

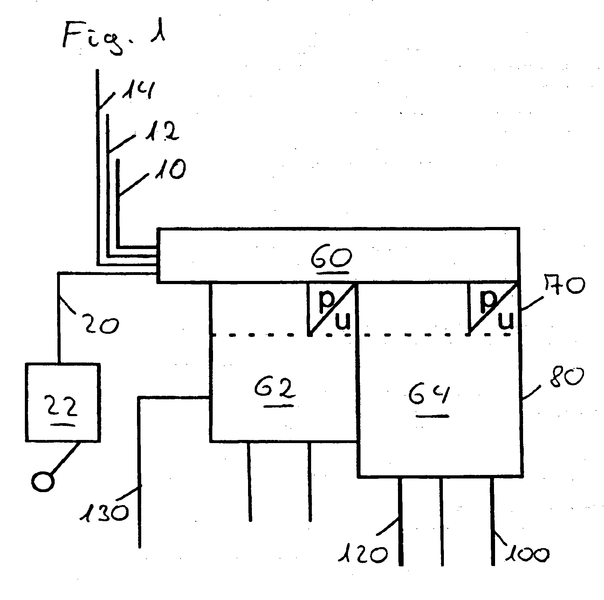

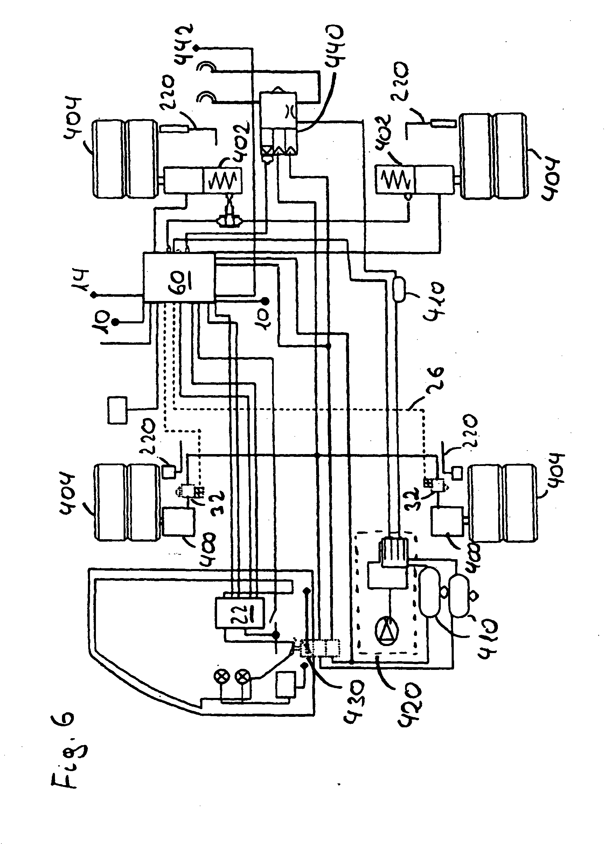

Figur 1 zeigt ein vereinfachtes Blockschaltbild eines Steuergerätes 60 und der angeschlossen Module 62, 64 mit elektrisch ansteuerbaren Ventilen, wobei mögliche elektrische und pneumatische Anschlüsse dargestellt sind. Weiterhin ist eine Handsteuereinheit 22 dargestellt, über die ein Fahrerwunsch an das Steuergerät 60 übertragen werden kann. Über die Handsteuereinheit 22 kann der Fahrer eine später genauer beschriebene Testfunktion für das Bremssystem sowie das Betätigen und Lösen der elektrisch gesteuerten Feststellbremse auslösen. Die in Figur 1 dargestellten Anschlüsse umfassen einen elektrischen Anschluss 10, der eine redundante Spannungsversorgung des Steuergerätes 60 gewährleistet, einen elektrischen Anschluss 14 zur Kopplung des Steuergerätes 60 an den CAN-Bus des Nutzfahrzeugs, einen Anschluss 20, der das Steuergerät 60 mit der Handsteuereinheit 22 verbindet, einen pneumatischen Anschluss 100 zur Kopplung mit mindestens einem Federspeicherbremszylinder 402, siehe zum Beispiel Figur 6, der Feststellbremse, einen pneumatischen Anschluss 120 zur Kopplung mit einem Steuereingang eines Anhängersteuermoduls und einen pneumatischen Anschluss 130 zur Kopplung mit mindestens einem Betriebsbremszylinder 400, siehe zum Beispiel Figur 6, des Nutzfahrzeugs. Insbesondere die räumliche Anordnung des Steuergerätes 60 und der Module 62, 64 mit elektrisch ansteuerbaren Ventilen ist erkennbar. Im oberen gestrichelt abgetrennten Bereich 70 der Module 62, 64 mit elektrisch ansteuerbaren Ventilen sind vorzugsweise die notwendigen Drucksensoren und Magnetventile angeordnet, um die Verbindungsleitungen zu dem Steuergerät 60 möglichst kurz zu halten. Im unteren Bereich 80 der Module 62, 64 mit elektrisch ansteuerbaren Ventilen sind die weiteren notwendigen Bauteile angeordnet, wie zum Beispiel Verrohrungen, Rückschlagventile etc. Neben den dargestellten Anschlüssen des Steuergerätes 60 und der Module 62, 64 mit elektrisch ansteuerbaren Ventilen sind weitere Anschlüsse für einen weiteren Ausbau des Antiblockiersystems denkbar. Weiterhin umfassen die Module 62, 64 noch Druckluftversorgungsanschlüsse, die nicht dargestellt sind.

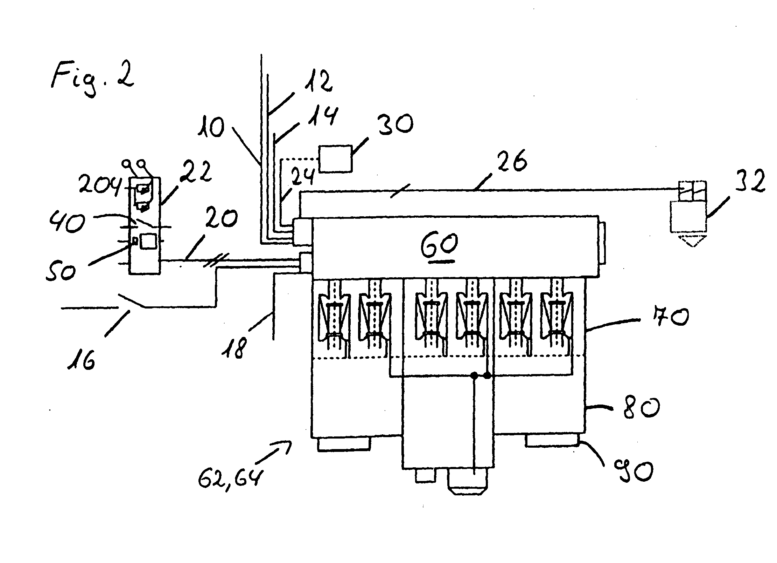

Figur 2 zeigt ein detaillierteres Blockschaltbild eines erfindungsgemäßen Steuergerätes 60, daran angeordneten Modulen 62, 64 mit elektrisch ansteuerbaren Ventilen zur Veranschaulichung der möglichen Verwendung gemeinsamer Druckluftausgänge. Insbesondere ist dargestellt, wie die Verrohrung im unteren Bereich 80 der Module 62, 64 mit elektrisch ansteuerbaren Ventilen gestaltet werden könnte, damit die Module 62, 64 des Antiblockiersystems und der elektrisch gesteuerten Feststellbremse gemeinsame Druckluftanschlüsse verwenden. Das Steuergerät 60 verfügt wieder über einen redundant ausgelegten Spannungsanschluss 10, einen Anschluss 14 an den CAN-Bus, einen Anschluss 20 an die Handsteuereinheit 22, einen Anschluss 16 für den Streckbremswertgeber, wobei dieser auch in die Handsteuereinheit 22 integriert sein kann. Weiterhin sind Anschlüsse 26 für ABS-Modulatoren 32, Anschlüsse 24 für ESP-Sensoren 30 und Anschlüsse 18 für Raddrehzahlsensoren vorhanden, wobei die Raddrehzahlsensoren insbesondere an den Rädern angeordnet werden, an denen ABS-Modulatoren vorhanden sind. Im oberen gestrichelt abgetrennten Bereich 70 der Module 62, 64 sind Magnetventile angeordnet, deren Ausgänge im unteren Bereich 80 der Module 62, 64 exemplarisch zusammengefasst sind. Es ist möglich, die Anschlüsse an den Vorratsbehälter, die Steueranschlüsse für Betriebs- oder Federspeicherbremszylinder sowie die Abluftanschlüsse der Module 62, 64 in der dargestellten Weise zusammenzufassen. Die zusammengefassten Anschlüsse können über eine gemeinsame Anschlussplatte 90 aus den unteren Bereichen 80 der Module 62, 64 geführt werden.

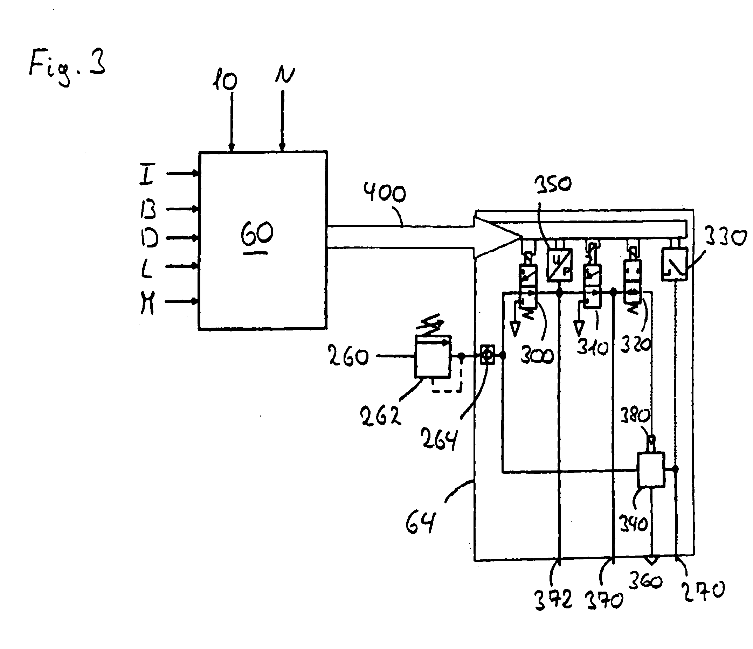

Figur 3 zeigt eine mögliche Ausführungsform eines Moduls 64 zur Steuerung der Feststellbremse, die gleichzeitig in der Lage ist eine Streckbremsfunktion bereitzustellen. Das Modul 64 mit elektrisch ansteuerbaren Ventilen zur Steuerung der elektrischen Feststellbremse umfasst eine Druckluftversorgungsleitung 260, die über einen Druckbegrenzer 262 mit nachgeschaltetem Rückschlagventil 264 das Modul 64 mit Druckluft versorgt. Das Modul beinhaltet weiterhin eine pulsweitenmoduliert steuerbare Ventileinrichtung 300 und weist sowohl einen Anschluss 270 für einen Federspeicherbremszylinder als auch zwei Steueranschlüsse 370, 372, die mit einem Steuereingang eines Anhängersteuermoduls koppelbar sind, auf. Vorzugsweise ist das Modul 64 geeignet, die Funktion eines elektrisch gesteuerten Feststellbremssystems zur Verfügung zu stellen. Hierzu enthält das Modul die wesentliche als 3/2-Wegeventil ausgelegte Ventileinrichtung 300 sowie ein 2/2-Wegeventil 320. In Abhängigkeit der Schaltstellung der genannten Ventileinrichtungen 300, 320 wird der Steuereingang 380 eines Relaisventils 340 angesteuert. Das Relaisventil 340 wird mit Druck aus der Versorgungsleitung 260 beaufschlagt, der in Abhängigkeit des am Steuereingang 380 des Relaisventils 340 anstehenden Steuerdrucks an den Federspeicherbremszylinderanschluss 270 weitergeleitet wird. Weiterhin ist ein Druckschalter 330 vorgesehen, über den erfassbar ist, ob der Federspeicherbremszylinderanschluss 270 belüftet oder entlüftet ist, also ob die Feststellbremse eingelegt oder gelöst ist. In der dargestellten Stellung des 2/2-Wegeventils 320 kann der Federspeicherbremszylinderanschluss 270 in Abhängigkeit der Stellung des 3/2-Wegeventils 300 belüftet oder entlüftet werden. Wird das 2/2-Wegeventil 320 umgeschaltet, so wird der Druck am Federspeicherbremszylinderanschluss 270 gehalten.

Durch das Zusammenspiel des 3/2-Wegeventils 300 mit dem 2/2-Wegeventil 320 lässt sich auch eine Testfunktion für das Nutzfahrzeug realisieren, indem nämlich bei entlüftetem Federspeicherbremszylinderanschluss 270 über den Steueranschluss 370, der dort angeschlossene Steuereingang des Anhängersteuermoduls kurzzeitig belüftet wird. Die Belüftung dieses Steuereingangs hat ein Entlüften der Anhängerbremsanlage zur Folge, so dass das der gesamte Fahrzeugzug in diesem Zustand durch das Nutzfahrzeug gehalten werden muss, wobei der entlüftete Zustand des Federspeicherbremsanschlusses 270 durch Umschalten des 2/2-Wegeventils 320 in seiner Druckhaltestellung aufrechterhalten werden kann.

Eine weitere wichtige Aufgabe übernimmt das 3/2-Wegeventil 300 im Hinblick auf eine Streckbremsfunktion. Indem das 3/2-Wegeventil 300 pulsweitenmoduliert durch das elektronische Steuergerät 60 angesteuert wird, kann ein gezielter Druck am Steueranschluss 370 für das Anhängersteuermodul zur Verfügung gestellt werden. Insbesondere kann eine Bremsung des Anhängers unabhängig von der Bremsung des Nutzfahrzeuges erfolgen, so dass ein Auflaufen des Anhängers auf das Nutzfahrzeug vermieden werden kann. Ob eine solche Streckbremsung erlaubt ist, hängt vom Fahrzustand des Fahrzeugs ab. Indem dieser durch die über den CAN-Bus empfangenen und von den Raddrehzahlsensoren 220 ermittelten Daten berücksichtigt wird, können sicherheitskritische Gesichtspunkte, beispielsweise Lenkmanöver, berücksichtigt werden, und es kann sichergestellt werden, dass eine Pulsweitenmodulation des 3/2-Wegeventils 300 nur dann erfolgt, wenn tatsächlich die Streckbremsfunktionalität benötigt wird, wodurch die Lebensdauer die 3/2-Wegeventils 300 stark erhöht wird. Die Überprüfung, ob die Pulsweitenmodulation des 3/2-Wegeventils 300 grundsätzlich zugelassen ist, wird unter anderem von den Signalen B, D, I, L, M und N abhängig gemacht. Diese Signale kennzeichnen die folgenden Fahrzustände des Fahrzeugs, beziehungsweise sie sind von diesen Fahrzuständen abgeleitet, etwa durch vergleichen mit Schwellenwerten:
- B:: Motorelektronikstatus
- D:: Retarderstatus
- I:: Geschwindigkeit kleiner als Schwellwert
- L:: Lenkwinkel bzw. Raddifferenzdrehzahl
- M:: Status Gaspedal und Motorbremse
- N:: Gemessene Geschwindigkeit vom ABS

Die Information über die Fahrzustände lässt sich aus den verschiedensten Quellen beziehen. Die Fahrzeuggeschwindigkeit kann beispielsweise vom Tachographen des Fahrzeugs bezogen werden. Ebenfalls können die Raddrehzahlsensoren des Antiblockiersystems verwendet werden, da deren Signale bei niedrigen Geschwindigkeiten genauer sind als dasjenige vom Tachographen. Zusätzlich können Geschwindigkeitswerte des Navigationssystems als Absolutwerte mit eingerechnet werden. Das Drehmoment des Motors steht beispielsweise im Rahmen der Motorsteuerung zur Verfügung. Für den Lenkwinkel beziehungsweise die Raddifferenzdrehzahl sind Raddrehzahlsensoren vorhanden. Grundsätzlich können die Signale direkt oder über einen Datenbus bezogen werden. Zur Erfassung der Neigung des Fahrzeugs ist insbesondere noch festzustellen, dass diese durch eine Sensorik erfasst werden kann; die Neigungsinformation kann aber auch durch das Navigationssystem zur Verfügung gestellt werden.

Die diskutierten und unter Umständen weitere Signale beziehungsweise davon abgeleitete Größen werden dem Steuergerät 60 eingegeben. In Abhängigkeit der empfangenen Signale veranlasst, dass elektronische Steuergerät 60 nun die pulsweitenweitenmodulierte Ansteuerung 400 des 3/2-Wegeventils 300, wobei eine pulsweitenmodulierte Ansteuerung 400 insbesondere dann unterbunden werden kann, wenn aufgrund eines oder mehrerer der dem Steuergerät 60 zugeführten Informationen klar ist, dass keine Streckbremsung stattfinden sollte. Das Modul 64 enthält ein weiteres elektrisch ansteuerbares 3/2-Wegeventil 310, das als bistabiles Ventil ausgestattet ist. Dieses Magnetventil 310 versorgt den Steueranschluss 370 des Moduls 64 mit Druckluft, so dass das dargestellte elektropneumatische Modul 64 einen Steuerdruck für das Anhängersteuermodul wahlweise auf der Grundlage einer monostabilen Ventilauslegung, nämlich über das 3/2-Wegeventil 300, oder einer bistabilen Ventilauslegung, nämlich über das 3/2-Wegeventil 310 zur Verfügung stellen kann. Das elektropneumatische Modul 64 kann somit verschiedenen Anforderungsprofilen der Nutzfahrzeughersteller gerecht werden.

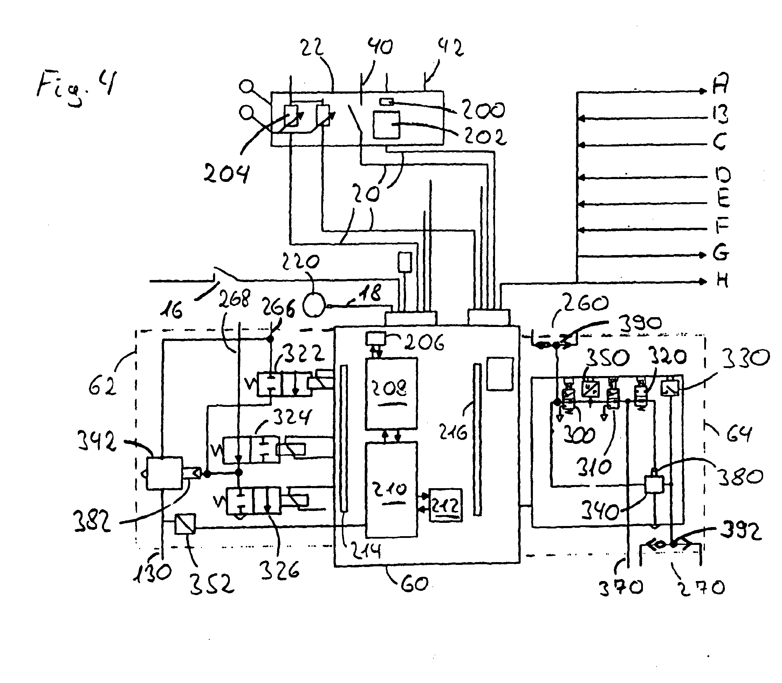

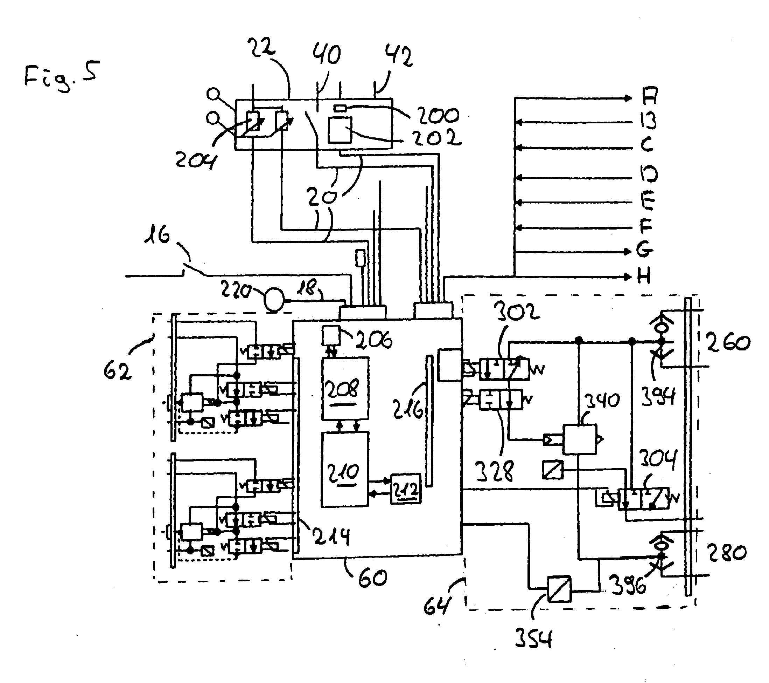

Figur 4 und 5 zeigen Schaltdiagramme eines Teils eines erfindungsgemäßen Bremsanlage zur Veranschaulichung möglicher Ausführungsformen hinsichtlich des Steuergerätes 60 und der Module 62, 64 mit elektrisch ansteuerbaren Ventilen. Die Schaltdiagramme zeigen das Steuergerät 60, das Mikrocontroller 208 und 210, zwei separate Relais 214, 216 zur getrennten Deaktivierung des Antiblockiersystems und der elektrisch gesteuerten Feststellbremse und einen Watch-Dog-Timer 212 umfasst. Eine Watch-Dog-Funktion ist nützlich, da es sich im Zusammenhang mit der vorliegenden Erfindung um eine sicherheitsrelevante Steuerfunktion handelt, bei der ein Mikrocontroller und ein Computersystem fehlersicher sein und sich im Fehlerfall zumindest teilweise abschalten müssen. Zu diesem Zweck ist in dem Steuergerät 60 der Watch-Dog-Timer 212 vorgesehen. Darüber hinaus sind Steuergeräte mit sicherheitsrelevanten Funktionen vorteilhafter Weise redundant mit Strom versorgt und haben einen Schreib-/Lesespeicher 206, um die zulässigen Steuer- und Regelparameter sowie vorgegebene Schwellenwerte, beispielsweise einen Geschwindigkeitsschwellenwert, sowie Fehlerzustände zu speichern. Weiterhin sind mögliche Anschlüsse des Steuergerätes 60 dargestellt. Gezeigt sind ein Anschluss 18 an einen Drehzahlsensor 220, ein Anschluss 16 an einen Streckbremswertgeber, ein Anschluss 34 an einen Gierungssensor 230, mehrere Anschlüsse 20 an eine Handsteuereinheit 22, die eine Ladeschaltung 200, einen Akku 202, einen Aufweckschalter 40, eine Erdung 42 sowie Sensoren 204 umfasst. Ebenfalls gezeigt ist die Anschlussleitung 14 an den CAN-Bus und damit zusammenhängend mit A bis H gekennzeichnet die über diese Datenleitung eingehenden beziehungsweise ausgehenden Signale. Im Einzelnen sind dies:
A: Status der Handsteuereinheit
B: Motorelektronikstatus
C: Kupplungsstatus
D: Retarderstatus
E: Getriebestatus
F: Raddrehzahl Anhänger
G: ECPB-Status
H: ABS-Status

Weitere Anschlüsse an das Steuergerät 60 können jedoch je nach Bedarf vorgesehen sein.

Die Ventileinrichtungen 62 und 64 sind mit dem Steuergerät 60 verbunden. In Figur 4 ist das Modul 64 für die elektrisch gesteuerte Feststellbremse identisch mit der in Figur 3 ausführlich beschriebenen Ausführungsform. Es wurde lediglich auf den Steueranschluss 372 verzichtet, der bei Bedarf jedoch wieder eingefügt werden kann, und die Druckluftversorgung 260 und der Federspeicherbremszylinderanschluss 270 mit einer Rohrbruchsicherung in Form einer redundanten Auslegung mit Wechselventil 392 versehen. Die dargestellten Wechselventile 390, 392 sperren bei einem Druckabfall in einer der Anschlussleitungen immer die Anschlussleitung an der der geringere Druck ansteht. In Figur 5 ist eine weitere mögliche Ausführungsform eines Moduls 64 mit elektrisch ansteuerbaren Ventilen einer elektrisch gesteuerten Feststellbremse dargestellt, die im Wesentlichen die gleichen Funktionen bereitstellt. Die Druckversorgung erfolgt redundant über den Druckluftanschluss 260 und ein Wechselventil 394. Ein Relaisventil 340 wird über ein 2/2-Wegeventil 328 und ein 3/2-Wegeventil 302 angesteuert, um eine elektrische Feststellbremse zu realisieren. Weiterhin ist ein Drucksensor 354 vorgesehen, der den Druck vor dem Wechselventil 396 misst. Der Anschluss des Drucksensors kann jedoch auch am Federspeicherzylinder der Feststellbremse erfolgen.

Die in den Figuren 4 und 5 gezeigten Module 62 für das Antiblockiersystem unterscheiden sich in der Anzahl der dargestellten identischen Baugruppen. Zusätzliche identische Baugruppen können notwendig sein, wenn zum Beispiel zusätzliche Achsen des Nutzfahrzeugs von dem Antiblockiersystem geregelt werden sollen. Sollen weitere Achsen beziehungsweise Betriebsbremszylinder mit einer Antiblockier-Funktionalität ausgestattet werden, so muss das Modul 62 durch eine entsprechende Anzahl zusätzlicher Baugruppen erweitert werden. Das Antiblockiersystem kann zusammen mit dem Steuergerät 60 mit einigen weiteren Funktionen ausgestattet werden:
- Elektronische Bremskraftverteilung (EBD)
- Speicherung der ABS-Ereignisse
- Bremsendiagnose (BD)
- Anzeige durchdrehender Hinterachsenräder
- RSP zur Stabilisierung gegen Kippen
- ESP zur Stabilisierung gegen Kippen und zur Giermomentstabilisation

Da die grundsätzliche Funktionsweise und der Aufbau eines Antiblockiersystems allgemein bekannt und nicht wesentlich für die Erfindung ist, kann auf eine ausführliche Erläuterung des Aufbaus und der Funktionsweise des Moduls 62 verzichtet werden. Darüber hinaus ist die gezeigte Ausführungsform des Moduls 62 nur als eine der möglichen gängigen Ausgestaltungsformen eines Antiblockiersystems zu betrachten. Das in Figur 4 dargestellte einzelne Modul umfasst ein Relaisventil 342 mit einem Steuereingang 382, einen Drucksensor 352 und mehrere 2/2-Wegeventile 322, 324 und 326. Ein Druckluftanschluss 266 wird verwendet, um gesteuert von dem 2/2-Wegeventil 322 den Steuereingang 382 des Relaisventils 342 anzusteuern. Das Relaisventil 342 wird mit Druck von dem Druckluftanschluss 266 beaufschlagt und kann einen Betriebsbremszylinder über den pneumatischen Anschluss 130 bedienen. Der an dem Steuereingang 382 anstehende Druck kann über das Ablassventil 326 reduziert werden. Fällt die elektronische Steuerung des ABS aus, so werden die in Figur 4 dargestellten 2/2-Wegeventile 322, 324, 326 automatisch in den dargestellten Zustand geschaltet. In diesem Zustand ist eine direkte Ansteuerung des Relaisventils über das 2/2-Wegeventil 324 zur pneumatischen Absicherung möglich. Die Druckversorgung kann über einen separaten Druckluftanschluss 268 erfolgen.

Neben dem Aufwecken des Systems über den Aufweckschalter ist auch die Berücksichtigung von Signalen über den CAN-Bus denkbar. Beispielsweise könnte das System durch einschalten der Zündung oder durch ein allgemeines "Wake-Up"-Signal aus einem inaktiven Zustand in einen aktiven Zustand versetzt werden.

Figur 6 zeigt eine vereinfachte Systemdarstellung des Nutzfahrzeuges zur Veranschaulichung der möglichen Anordnung einzelner Bauteile des erfindungsgemäßen Bremssystems. Ein Fußbremsventil 430 und die Handsteuereinheit 22 sind in der Fahrerkabine angeordnet. Ein durch die Handsteuereinheit 22 und/oder das Fußbremsventil 430 erkannter Fahrerwunsch wird von elektrischen Steuerleitungen an das angeschlossene Steuergerät 60 übertragen und dort in ein Signal für die angeschlossene Bremsanlage umgewandelt. Die Bremsanlage umfasst Betriebsbremszylinder 400, Federspeicherbremszylinder 402, Druckluftbehälter 410 und eine Druckluftaufbereitungsanlage 420 und kann in bekannter Weise durch Beaufschlagung der Bremszylinder mit Druckluft eine Verzögerung des Nutzfahrzeugs bewirken. Weiterhin sind Raddrehzahlsensoren 220 und ABS-Modulatoren 32 mit separaten Schalldämpfern zur Entlüftung vorgesehen, um ein Antiblockiersystem für das Nutzfahrzeug zu realisieren. Wenn die Hinterachse ebenfalls in das Antiblockiersystem integriert werden soll, müssen in den entsprechenden Verbindungsleitungen zwischen Steuergerät 60 und den Federspeicherbremszylindern 402 ebenfalls ABS-Modulatoren 32 mit eigenen Schalldämpfern zu Entlüftung vorgesehen sein. Die achsweise Zusammenfassung einzelner Bauteile, wie der Schalldämpfer, ist denkbar.

Es ist weiterhin ein Anschluss 442 für den Anhänger an den CAN-Bus und ein Anhängersteuermodul 440 dargestellt, obwohl letzteres durchaus in dem Anhänger selbst integriert sein könnte. Über die Verbindung zwischen Steuergerät 60 und Anhängersteuermodul 440 kann die Bremsanlage in der Lage sein eine Streckbremsung des Fahrzeugzuges durchzuführen, falls eine solche vom Fahrer angefordert wird.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste:

- 10: Anschluss Spannungsversorgung (redundant)
- 12: Anschluss Betriebsbremswertgeber
- 14: CAN-Anschluss
- 16: Anschluss Streckbremswertgeber
- 18: Anschluss Raddrehzahlsensoren
- 20: Anschluss Handsteuereinheit
- 22: Handsteuereinheit
- 30: ESP-Sensoren
- 32: ABS-Modulatoren
- 34: Anschluss Gierungssensor
- 40: Aufweckschalter
- 42: Erdung (GND)
- 50: Akkuladeschaltung
- 60: Steuergerät
- 62: Modul mit elektrisch ansteuerbaren Ventilen
- 64: Modul mit elektrisch ansteuerbaren Ventilen
- 70: Bereich
- 80: Bereich
- 90: gemeinsame Anschlussebene
- 100: pneumatischer Anschluss
- 120: pneumatischer Anschluss
- 130: pneumatischer Anschluss
- 200: Ladeschaltung
- 202: Akku
- 204: Sensoren
- 206: Speicher
- 208: Mikrocontroller
- 210: Mikrocontroller
- 212: Watch-Dog-Timer
- 214: Shut-Down-Relais
- 216: Shut-Down-Relais
- 220: Raddrehzahlsensor
- 230: Gierungssensor
- 260: Druckluftanschluss
- 262: Überdruckventil
- 264: Rückschlagventil
- 266: Druckluftanschluss
- 268: Druckluftanschluss
- 270: Federspeicherbremszylinderanschluss
- 280: Feststellbremszylinderanschluss
- 300: 3/2-Wegeventil
- 302: 3/2-Wegeventil
- 304: 3/2-Wegeventil
- 310: bistabiles 3/2-Wegeventil
- 320: 2/2-Wegeventil
- 322: 2/2-Wegeventil
- 324: 2/2-Wegeventil
- 326: 2/2-Wegeventil
- 328: 2/2-Wegeventil
- 330: Druckschalter
- 340: Relaisventil
- 342: Relaisventil
- 350: Drucksensor
- 352: Drucksensor
- 354: Drucksensor
- 360: Entlüftung
- 370: Steueranschluss
- 372: Steueranschluss
- 380: Steuereingang
- 382: Steuereingang
- 390: Wechselventil
- 392: Wechselventil
- 394: Wechselventil
- 396: Wechselventil
- 400: Betriebsbremszylinder
- 402: Federspeicherbremszylinder
- 404: Rad
- 410: Vorratsbehälter
- 420: Druckluftaufbereitungsanlage
- 430: Fußbremsventil
- 440: Anhängersteuermodul
- 442: Anhängeranschluss CAN-Bus

## Patentansprüche

1. Steuergerät (60) für eine Bremsanlage eines Nutzfahrzeuges, wobei die Bremsanlage
- Betriebsbremszylinder (400) und Federspeicherbremszylinder (402) zum Bremsen des Nutzfahrzeugs,
- ein elektronisches Steuergerät (60),
- Sensoren (220, 30, 230) zum Erfassen des Bewegungszustandes des Nutzfahrzeugs,
- ein Fußbremsventil (430) zum Betätigen der Betriebsbremse,
- eine Handsteuereinheit (22), über die von der Betätigungsart der Handsteuereinheit (22) abhängige Fahrerwünsche an das elektronische Steuergerät (60) übermittelbar sind,
- ein Modul (62) mit elektrisch ansteuerbaren Ventilen für ein Antiblockiersystem und ein Modul (64) mit elektrisch ansteuerbaren Ventilen für eine elektrisch gesteuerte Feststellbremse umfasst,
- wobei das Modul (62) mit elektrisch ansteuerbaren Ventilen für das Antiblockiersystem und das Modul (64) mit elektrisch ansteuerbaren Ventilen für die elektrisch gesteuerte Feststellbremse mit dem Steuergerät (60) verbunden sind,
- wobei das elektronische Steuergerät (60) sowohl die Beeinflussung des Antiblockiersystems als auch der elektrisch gesteuerten Feststellbremse übernimmt,
**dadurch gekennzeichnet, dass** das Modul (62) mit elektrisch ansteuerbaren Ventilen für das Antiblockiersystem und das Modul (64) mit elektrisch ansteuerbaren Ventilen für die elektrisch gesteuerte Feststellbremse zumindest teilweise gemeinsame Druckluftein- und Druckluftausgänge verwenden, dass die Funktion des Antiblockiersystems und die Funktion der elektrischen Feststellbremse getrennt voneinander deaktiviert werden können, dass das Steuergerät (60) Mikrocontroller (208, 210), einen Watch-Dog-Timer (212) und zwei separate Relais (214, 216) zur getrennten Deaktivierung des Antiblockiersystems und der elektrisch gesteuerten Feststellbremse umfasst, dass das Steuergerät (60) weiterhin einen Schreib-/Lesespeicher (206) umfasst, um zulässige Steuer- und Regelparameter sowie vorgegebene Schwellenwerte zu speichern, und dass der Watch-Dog-Timer (212) dazu eingerichtet ist, eine Watch-Dog-Funktion auszuführen, die die Mikrocontroller (208, 210) überwacht und im Fehlerfall teilweise abschaltet.

2. Steuergerät (60) gemäß Anspruch 1, **dadurch gekennzeichnet, dass** das Modul (62) mit elektrisch ansteuerbaren Ventilen für das Antiblockiersystem eine Belüftung der Federspeicherbremszylinder durch die Betriebsbremse zumindest teilweise verhindert, falls die Feststellbremse belüftet ist, wobei eine maximale Druckbelastung des Zylinders berücksichtigt wird.

3. Steuergerät (60) gemäß Anspruch 1 oder 2, **dadurch gekennzeichnet, dass** das Modul (62) mit elektrisch ansteuerbaren Ventilen für das Antiblockiersystem eine Belüftung der Federspeicherbremszylinder durch die Feststellbremse zumindest teilweise verhindert, wenn die Betriebsbremse bereits betätigt ist, wobei eine maximale Druckbelastung des Zylinders berücksichtigt wird.

4. Steuergerät (60) gemäß Anspruch 2 oder 3, **dadurch gekennzeichnet, dass** die Belüftung der Feststellbremse auch bei belüfteter Betriebsbremse erfolgen kann, wobei eine maximale Druckbelastung des Zylinders berücksichtigt wird.

5. Steuergerät (60) gemäß einem der Ansprüche 2 bis 4, **dadurch gekennzeichnet, dass** das Entlüften des Feststellbremse bei gleichzeitig betätigter Betriebsbremse erfolgen kann, wobei eine maximale Druckbelastung des Zylinders berücksichtigt wird.

6. Steuergerät (60) gemäß einem der vorhergehenden Ansprüche, **dadurch gekennzeichnet, dass** das Steuergerät (60) das Modul (64) mit elektrisch ansteuerbaren Ventilen für die elektrisch gesteuerte Feststellbremse so ansteuert, dass bei belüftetem Federspeicherbremszylinder des Nutzfahrzeugs die Steuerleitung zum Anhänger entlüftet wird, um zu testen, ob das Zugfahrzeug den gesamten Zug halten kann.

7. Steuergerät (60) gemäß einem der vorhergehenden Ansprüche, **dadurch gekennzeichnet, dass** über die Handsteuereinheit (22) die Anhängerbremse gelöst werden kann.

8. Steuergerät (60) gemäß einem der vorhergehenden Ansprüche, **dadurch gekennzeichnet, dass** sich das Steuergerät bei Empfang eines Aufwecksignals in Betriebsbereitschaft versetzen kann.

9. Steuergerät (60) gemäß einem der vorhergehenden Ansprüche, **dadurch gekennzeichnet, dass** das ABS-System und die elektrisch gesteuerte Feststellbremse nur bei eingeschalteter Zündung arbeiten.

10. Steuergerät (60) gemäß einem der Ansprüche 1 bis 8, **dadurch gekennzeichnet, dass** das ABS-System und die elektrisch gesteuerte Feststellbremse nach dem Einschalten der Zündung den Betrieb aufnehmen und nach der Ausschalten der Zündung eine oszillatorgesteuerte Nachlaufzeit vergeht, bis das Steuergerät (60) zumindest teilweise deaktiviert wird.

11. Steuergerät (60) gemäß einem der Ansprüche 1 bis 8, **dadurch gekennzeichnet, dass** ein Drucksensor (354) vorhanden ist, der den Druck in an Anschluss (280) angeschlossenen Feststellbremszylindern misst und dieser Drucksensor (354) pneumatisch mit dem Feststellbremsrelaisausgang verbunden ist.

12. Steuergerät (60) gemäß einem der Ansprüche 1 bis 8, **dadurch gekennzeichnet, dass** ein Drucksensor (354) mit einer elektrischen Leitung mit dem Steuergerät (60) verbunden ist, welcher den Druck in den an dem Anschluss (280) angeschlossenen Feststellbremszylindern misst, wobei dieser Drucksensor (354) dem Wechselventil (396) nachgeordnet ist.

13. Steuergerät (60) gemäß einem der vorhergehenden Ansprüche, **dadurch gekennzeichnet, dass** das Modul (62) mit elektrisch ansteuerbaren Ventilen für das Antiblockiersystem und das Modul (64) mit elektrisch ansteuerbaren Ventilen für die elektrisch gesteuerte Feststellbremse an einem Gehäuse angeordnet sind, welches das gemeinsame elektronische Steuergerät (60) aufnimmt.

14. Steuergerät gemäß einem der vorhergehenden Ansprüche, **dadurch gekennzeichnet,**
- **dass** an dem Modul (64) für die elektrisch gesteuerte Feststellbremse ein pneumatischer Steueranschluss (120) vorgesehen ist, der mit einem Steuereingang eines Anhängersteuermoduls koppelbar ist und
- **dass** das elektronische Steuergerät (60) über den pneumatischen Steueranschluss (120) eine Streckbremsfunktion für den Anhänger bereitstellen kann, falls eine solche Streckbremsung angefordert wird.

15. Steuergerät (60) gemäß einem der vorhergehenden Ansprüche, **dadurch gekennzeichnet, dass** eine redundante Spannungsversorgung (10) für das elektronische Steuergerät (60) vorgesehen ist.

16. Steuergerät (60) gemäß einem der vorhergehenden Ansprüche, **dadurch gekennzeichnet, dass** das elektronische Steuergerät (60) einen Anschluss an ein serielles Bussystem (14) aufweist.

17. Steuergerät (60) gemäß Anspruch 16, **dadurch gekennzeichnet, dass** Fahrzeugbeschleunigungsmesswerte über den Anschluss an das serielle Bussystem an das Steuergerät übertragen werden.

18. Steuergerät gemäß einem der vorhergehenden Ansprüche, **dadurch gekennzeichnet,**
- **dass** die Sensoren (220, 30, 230) der Bremsanlage zum Erfassen des Bewegungszustandes des Nutzfahrzeugs Gierungssensoren (34) umfassen und
- **dass** der Betriebsbremszylinderdruck in Abhängigkeit von der Nutzfahrzeugbeschleunigung um Quer- und Längsachse geregelt wird.

19. Steuergerät (60) gemäß einem der vorhergehenden Ansprüche, **dadurch gekennzeichnet, dass** der Betriebsbremszylinderdruck in Abhängigkeit von mindestens einer der folgenden Größen geregelt wird:
- Feststellbremszylinderdruck
- Feststellbremswertgeberdruck
- Fehlerzustand des Systems
- Status des Fußbremswertgebers
- Nutzfahrzeuggeschwindigkeit und Radgröße

20. Steuergerät (60) gemäß einem der vorhergehenden Ansprüche, **dadurch gekennzeichnet, dass** der Feststellbremszylinderdruck in Abhängigkeit des Handbremswertgebers geregelt wird.

21. Steuergerät (60) gemäß einem der vorhergehenden Ansprüche, **dadurch gekennzeichnet, dass** die Bremsanlage die Funktion einer Antischlupfregelung bereitstellt, wobei das elektronische Steuergerät (60) die Regelung der Antischlupfregelung übernimmt.

22. Bremsanlage, die ein elektronisches Steuergerät (60) gemäß einem der vorhergehenden Ansprüche umfasst.

23. Verfahren zum Steuern einer Bremsanlage für ein mit einem Anhänger koppelbares Nutzfahrzeug, mit
- Betriebsbremszylindern (400) und Federspeicherbremszylindern (402) zum Bremsen des Nutzfahrzeugs,
- ein elektronisches Steuergerät (60),
- Sensoren (220, 30, 230) zum Erfassen des Bewegungszustandes des Nutzfahrzeugs,
- einem Fußbremsventil (430) zum Betätigen der Betriebsbremse,
- einer Handsteuereinheit (22), über die von der Betätigungsart der Handsteuereinheit (22) abhängige Fahrerwünsche an das elektronische Steuergerät (60) übermittelt werden,
- einem Modul (62) mit elektrisch ansteuerbaren Ventilen für ein Antiblockiersystem und einem Modul (64) mit elektrisch ansteuerbaren Ventilen für eine elektrisch gesteuerte Feststellbremse mit einem Anhängersteuerventil zum Anschluss eines Anhängers, wobei die Module (62, 64) mit dem Steuergerät (60) verbunden sind,
- wobei das elektronische Steuergerät (60) sowohl die Beeinflussung des Antiblockiersystems als auch der elektrisch gesteuerten Feststellbremse übernimmt,
**dadurch gekennzeichnet, dass** das Modul (62) mit elektrisch ansteuerbaren Ventilen für das Antiblockiersystem und das Modul (64) mit elektrisch ansteuerbaren Ventilen für die elektrisch gesteuerte Feststellbremse zumindest teilweise gemeinsame Druckluftein- und Druckluftausgänge verwenden, und dass bei einem Defekt des Antiblockiersystems die Funktion des Antiblockiersystems getrennt von der Funktion der elektrisch gesteuerten Feststellbremse deaktiviert wird, und dass bei einem Defekt der elektrisch gesteuerten Feststellbremse die Funktion der elektrisch gesteuerten Feststellbremse getrennt von der Funktion des Antiblockiersystems deaktiviert wird, dass das Steuergerät (60) Mikrocontroller (208, 210), einen Watch-Dog-Timer (212) und zwei separate Relais (214, 216) zur getrennten Deaktivierung des Antiblockiersystems und der elektrisch gesteuerten Feststellbremse umfasst, dass das Steuergerät (60) weiterhin einen Schreib-/Lesespeicher (206) umfasst, um die zulässigen Steuer- und Regelparameter sowie vorgegebene Schwellenwerte zu speichern, und dass der Watch-Dog-Timer (212) eine Watch-Dog-Funktion ausführt, die die Mikrocontroller (208, 210) überwacht und im Fehlerfall teilweise abschaltet, und dass das elektronische Steuergerät (60) unter Verwendung des Moduls (64) für die elektrisch gesteuerte Feststellbremse und insbesondere des vorhandenen Steueranschlusses (120) eine kontrollierte Steckbremsung einleitet und überwacht, falls eine Streckbremsung angefordert wird.

## Claims

1. Control device (60) for a brake system of a commercial vehicle, wherein the brake system comprises:
- service brake cylinders (400) and spring brake cylinders (402) for braking the commercial vehicle,
- an electronic control device (60),
- sensors (220, 30, 230) for detecting the state of movement of the commercial vehicle,
- a foot brake valve (430) for activating the service brake,
- a manual control unit (22) by means of which driver's requests which are dependent on the method of activation of the manual control unit (22) can be transmitted to the electronic control device (60),
- a module (62) having electrically selectable valves for an anti-lock brake system and a module (64) having electrically selectable valves for an electrically controlled parking brake,
- wherein the module (62) is connected to electrically selectable valves for the anti-lock brake system and the module (64) is connected to electrically selectable valves for the electrically controlled parking brake with the control device (60),
- wherein the electronic control device (60) performs the influencing of both the anti-lock brake system and of the electrically controlled parking brake,
**characterised in that** the module (62) having electrically selectable valves for the anti-lock brake system and the module (64) having electrically selectable valves for the electrically controlled parking brake at least partially use common compressed air inlets and compressed air outlets, **in that** the function of the anti-lock brake system and the function of the electrically controlled parking brake can be deactivated separately, **in that** the control device (60) comprises microcontrollers (208, 210), a watchdog timer (212) and two separate relays (214, 216) for the separate deactivation of the anti-lock brake system and the electrically controlled parking brake, **in that** the control device (60) further comprises a write-read memory (206) for storing allowable open- and closed-loop control parameters and preset threshold values, and **in that** the watchdog timer (212) is configured to perform a watchdog function which monitors the microcontrollers (208, 210) and partially deactivates them in the case of a fault.

2. Control device (60) according to claim 1, **characterised in that** the module (62) having electrically selectable valves for the anti-lock brake system at least partially prevents the spring brake cylinders from being ventilated by the service brake if the parking brake is ventilated, wherein a maximum pressure loading of the cylinder is taken into account.

3. Control device (60) according to claim 1 or 2, **characterised in that** the module (62) having electrically selectable valves for the anti-lock brake system at least partially prevents the spring brake cylinders from being ventilated by the parking brake if the service brake is already activated, wherein a maximum pressure loading of the cylinder is taken into account.

4. Control device (60) according to claim 2 or 3, **characterised in that** the parking brake can also be ventilated when the service brake is being ventilated, wherein maximum pressure loading of the cylinder is taken into account.

5. Control device (60) according to any of claims 2 to 4, **characterised in that** the parking brake can be vented when the service brake is simultaneously activated, wherein maximum pressure loading of the cylinder is taken into account.

6. Control device (60) according to any of the preceding claims, **characterised in that** the control device (60) actuates the module (64) having electrically selectable valves for the electrically controlled parking brake in such a way that when the spring brake cylinder of the commercial vehicle is ventilated, the control line to the trailer is vented in order to test whether the traction vehicle can hold the entire vehicle combination.

7. Control device (60) according to any of the preceding claims, **characterised in that** the trailer brake can be released by means of the manual control unit (22).

8. Control device (60) according to any of the preceding claims, **characterised in that** the control device can go into the standby state when a wakeup signal is received.

9. Control device (60) according to any of the preceding claims, **characterised in that** the ABS system and the electrically controlled parking brake operate only when the ignition is switched on.

10. Control device (60) according to any of claims 1 to 8, **characterised in that** the ABS system and the electrically controlled parking brake begin to operate after the ignition is switched on, and **in that** after the ignition is switched off an oscillator-controlled run-on time elapses until the control device (60) is at least partially deactivated.

11. Control device (60) according to any of claims 1 to 8, **characterised in that** a pressure sensor (354) is provided which measures the pressure in parking brake cylinders which are connected to the connection (280), and **in that** this pressure sensor (354) is pneumatically connected to the parking brake relay output.

12. Control device (60) according to any of claims 1 to 8, **characterised in that** a pressure sensor (354) is connected by an electric line to the control device (60) to measure the pressure in the parking brake cylinders which are connected to the connection (280), wherein this pressure sensor (354) is arranged downstream of the shuttle valve (396).

13. Control device (60) according to any of the preceding claims, **characterised in that** the module (62) having electrically selectable valves for the anti-lock brake system and the module (64) having electrically selectable valves for the electrically controlled parking brake are arranged on a housing which accommodates the common electronic control device (60).

14. Control device according to any of the preceding claims, **characterised in that**
- a pneumatic control connection (120) which can be coupled to a control input of a trailer control module is provided on the module (64) for the electrically controlled parking brake, and
- **in that** the electronic control device (60) can make available via the pneumatic control connection (120) an anti-jackknifing braking function for the trailer if such anti-jackknifing braking is requested.

15. Control device (60) according to any of the preceding claims, **characterised in that** a redundant voltage supply (10) is provided for the electronic control device (60).

16. Control device (60) according to any of the preceding claims, **characterised in that** the electronic control device (60) has a connection to a serial bus system (14).

17. Control device (60) according to claim 16, **characterised in that** vehicle acceleration measured values are transmitted to the control device via the connection to the serial bus system.

18. Control device (60) according to any of the preceding claims, **characterised in that**
- the sensors (220, 30, 230) of the brake system comprise yaw sensors (34) for sensing the state of movement of the commercial vehicle, and
- **in that** the service brake cylinder pressure is subjected to closed-loop control as a function of the commercial vehicle acceleration about the transverse axis and the longitudinal axis.

19. Control device (60) according to any of the preceding claims, **characterised in that** the service brake cylinder pressure is subjected to closed-loop control as a function of at least one of the following variables:
- parking brake cylinder pressure
- parking brake value signal generator pressure
- fault state of the system
- status of the foot brake value signal generator
- speed of commercial vehicle and wheel size.

20. Control device (60) according to any of the preceding claims, **characterised in that** the parking brake cylinder pressure is subjected to closed-loop control as a function of the handbrake value signal generator.

21. Control device (60) according to any of the preceding claims, **characterised in that** the brake system makes the function of a traction control system available, wherein the electronic control device (60) performs the closed-loop control of the traction control system.

22. Brake system which comprises an electronic control device (60) according to any of the preceding claims.

23. Method for controlling a brake system for a commercial vehicle which can be coupled to a trailer, having
- service brake cylinders (400) and spring brake cylinders (402) for braking the commercial vehicle,
- an electronic control device (60),
- sensors (220, 30, 230) for detecting the state of movement of the commercial vehicle,
- a foot brake valve (430) for activating the service brake,
- a manual control unit (22) by means of which driver's requests which are dependent on the method of activation of the manual control unit (22) are transmitted to the electronic control device (60),
- a module (62) having electrically selectable valves for an anti-lock brake system and a module (64) having electrically selectable valves for an electrically controlled parking brake having a trailer control valve for connecting a trailer, the modules (62, 64) being connected to the control device (60),
- wherein the electronic control device (60) performs the influencing of both the anti-lock brake system and of the electrically controlled parking brake,
**characterised in that** the module (62) having electrically selectable valves for the anti-lock brake system and the module (64) having electrically selectable valves for the electrically controlled parking brake at least partially use common compressed air inlets and compressed air outlets, **in that** the function of the anti-lock brake system is deactivated separately from the function of the electrically controlled parking brake if there is a defect in the anti-lock brake system and **in that** the function of the electrically controlled parking brake is deactivated separately from the function of the anti-lock brake system if there is a defect in the electrically controlled parking brake, **in that** the control device (60) comprises microcontrollers (208, 210), a watchdog timer (212) and two separate relays (214, 216) for the separate deactivation of the anti-lock brake system and the electrically controlled parking brake, **in that** the control device (60) further comprises a write-read memory (206) for storing allowable open- and closed-loop control parameters and preset threshold values, and **in that** the watchdog timer (212) performs a watchdog function which monitors the microcontrollers (208, 210) and partially deactivates them in the case of a fault, and **in that**, using the module (64) for the electrically controlled parking brake and the existing control connection (120) in particular, the electronic control device (60) initiates and monitors a controlled anti-jackknifing braking process if anti-jackknifing braking is requested.

## Revendications

1. Appareil (60) de commande pour un appareil de freinage d'un véhicule utilitaire, dans lequel l'installation de freinage comprend
- un cylindre (400) de frein de service et un cylindre (402) de frein à ressort accumulateur pour freiner le véhicule utilitaire,
- un appareil (60) électronique de commande,
- des capteurs (220, 30, 230) de détection de l'état de déplacement du véhicule utilitaire,
- une vanne (430) de frein au pied pour actionner le frein de service,
- une unité (22) manuelle de commande, par laquelle des souhaits du conducteur, qui dépendent du type d'actionnement de l'unité (22) manuelle de commande, peuvent être transmis à l'appareil (60) électronique de commande,
- un module (62) ayant des vannes, qui peuvent être commandées électriquement, pour un système d'antiblocage et un module (64) ayant des vannes, qui peuvent être commandées électriquement, pour un frein de stationnement commandé électriquement,
- dans lequel le module (62) ayant des vannes qui peuvent être commandées électriquement pour le système d'antiblocage et le module (64) ayant des vannes qui peuvent être commandées électriquement pour le frein de stationnement commandé électriquement sont reliés à l'appareil (60) de commande,
- dans lequel l'appareil (60) électronique de commande prend en charge à la fois l'influence sur le système d'antiblocage et sur le frein de stationnement commandé électriquement,
**caractérisé en ce que** le module (62), ayant des vannes pouvant être commandées électriquement, pour le système d'antiblocage et le module (64), ayant des vannes pouvant être commandées électriquement, pour le frein de stationnement commandé électriquement utilisent au moins en partie des entrées et des sorties d'air comprimé communes, **en ce que** l'appareil (60) de commande comprend des micro-unités de commande (208, 210), une minuterie (212) de surveillance et deux relais (214, 216) distincts pour désactiver séparément le système d'antiblocage et le frein de stationnement commandé électriquement, **en ce que** l'appareil (60) de commande comprend, en outre, une mémoire (206) d'écriture/lecture pour mémoriser des paramètres de commande et de régulation admissibles, ainsi que des valeurs de seuil données à l'avance et **en ce que** la minuterie (212) de surveillance est agencée pour exécuter une fonction de minuterie de surveillance, qui contrôle les micro-unités de commande (208, 210) et les met partiellement hors circuit et cas de défaut.

2. Appareil (60) de commande suivant la revendication 1, **caractérisé en ce que** le module (62), ayant des vannes pouvant être commandées électriquement, pour le système d'antiblocage empêche au moins en partie une alimentation en air du cylindre de frein à ressort accumulateur par le frein de service, si le frein de stationnement est alimenté en air, une charge maximum de pression du cylindre étant prise en compte.

3. Appareil (60) de commande suivant la revendication 1 ou 2, **caractérisé en ce que** le module (62), ayant des vannes pouvant être commandées électriquement, pour le système d'antiblocage empêche au moins en partie une alimentation en air du cylindre de frein à ressort accumulateur par le frein de stationnement, si le frein de service est déjà actionné, une charge maximum de pression du cylindre étant prise en compte.

4. Appareil (60) de commande suivant la revendication 2 ou 3, **caractérisé en ce que** l'alimentation en air du frein de stationnement peut s'effectuer aussi lorsque le frein de service est alimenté en air, une charge maximum de pression du cylindre étant prise en compte.

5. Appareil (60) de commande suivant l'une des revendications 2 à 4, **caractérisé en ce que** la purge d'air du frein de stationnement peut s'effectuer alors que le frein de service est actionné en même temps, une charge maximum de pression du cylindre étant prise en compte.

6. Appareil (60) de commande suivant l'une des revendications précédentes, **caractérisé en ce que** l'appareil (60) de commande commande le module (64), ayant des vannes pouvant être commandées électriquement, pour le frein de stationnement commandé électriquement, de manière à ce que, lorsque le cylindre de frein à ressort à accumulateur du véhicule utilitaire est alimenté en air, la ligne de commande allant à la remorque soit purgée d'air pour tester si le véhicule tracteur peut tenir toute la traction.

7. Appareil (60) de commande suivant l'une des revendications précédentes, **caractérisé en ce que** le frein de la remorque peut être desserré par l'unité (22) manuelle de commande.

8. Appareil (60) de commande suivant l'une des revendications précédentes, **caractérisé en ce que** l'appareil de commande peut être mis de manière à être prêt à servir à réception d'un signal d'alerte.

9. Appareil (60) de commande suivant l'une des revendications précédentes, **caractérisé en ce que** le système ABS et le frein de stationnement commandé électriquement ne fonctionnent que lorsque l'allumage est mis.

10. Appareil (60) de commande suivant l'une des revendications 1 à 8, **caractérisé en ce que** le système ABS et le frein de stationnement commandé électriquement prennent en charge le fonctionnement après que l'allumage est mis et, après que l'allumage est coupé, il s'écoule un temps de marche à vide commandé par oscillateur jusqu'à ce que l'appareil (60) de commande soit désactivé au moins en partie.

11. Appareil (60) de commande suivant l'une des revendications 1 à 8, **caractérisé en ce qu'**il y a un capteur (354) de pression, qui mesure la pression dans des cylindres de frein de stationnement raccordés à un raccord (280), et ce capteur (354) de pression communique pneumatiquement avec la sortie du relais de frein de stationnement.

12. Appareil (60) de commande suivant l'une des revendications 1 à 8, **caractérisé en ce qu'**un capteur (354) de pression est relié par une ligne électrique à l'appareil (60) de commande et mesure la pression dans les cylindres de frein de stationnement raccordé au raccord (280), ce capteur (354) de pression étant monté en aval de la vanne (396) à deux voies.

13. Appareil (60) de commande suivant l'une des revendications précédentes, **caractérisé en ce qu'**un module (62), ayant des vannes pouvant être commandées électriquement, pour le système d'antiblocage et le module (64), ayant des vannes pouvant être commandées électriquement, pour le frein de stationnement commandé électriquement sont disposés sur un boîtier, qui reçoit l'appareil (60) électronique de commande commun.

14. Appareil (60) de commande suivant l'une des revendications précédentes, **caractérisé**
- **en ce qu'**il est prévu, sur le module (64) pour le frein de stationnement commandé électriquement, un raccord (120) pneumatique de commande, qui peut être couplé à une entrée de commande d'un module de commande de remorque et
- **en ce que** l'appareil (60) électronique de commande peut, par le raccord (120) pneumatique de commande, mettre à disposition une fonction de frein de maintien en ligne pour la remorque, si un freinage de maintien en ligne de ce genre est exigé.

15. Appareil (60) de commande suivant l'une des revendications précédentes, **caractérisé en ce qu'**il est prévu une alimentation (10) redondante en tension de l'appareil (60) électronique de commande.

16. Appareil (60) de commande suivant l'une des revendications précédentes, **caractérisé en ce que** l'appareil (60) électronique de commande comporte une connexion à un système (14) sériel de bus.

17. Appareil (60) de commande suivant la revendication 17, **caractérisé en ce que** des valeurs de mesure de l'accélération du véhicule sont transmises à l'appareil (60) de commande par la connexion au système sériel de bus.

18. Appareil (60) de commande suivant l'une des revendications précédentes, **caractérisé**
- **en ce que** les capteurs (220, 30, 230) de l'installation de freinage comprennent, pour la détection de l'état de déplacement du véhicule utilitaire, des capteurs (34) d'embardée et
- **en ce que** la pression du cylindre de frein de service est réglée en fonction de l'accélération du véhicule utilitaire autour de l'axe transversal et de l'axe longitudinal.

19. Appareil (60) de commande suivant l'une des revendications précédentes, **caractérisé en ce que** la pression du cylindre de frein de service est réglée en fonction d'au moins l'une des grandeurs suivantes :
- pression du cylindre de frein de stationnement,
- pression de l'indicateur de valeur du frein de stationnement,
- état de défaillance du système,
- statut de l'indicateur de valeur du frein au pied,
- vitesse du véhicule utilitaire et dimension de roue.

20. Appareil (60) de commande suivant l'une des revendications précédentes, **caractérisé en ce que** la pression du cylindre de frein de stationnement est réglée en fonction de l'indicateur de valeur du frein manuel.

21. Appareil (60) de commande suivant l'une des revendications précédentes, **caractérisé en ce que** l'installation de freinage procure la fonction d'une régulation d'antipatinage, l'appareil (60) électronique de commande prenant en charge la régulation de l'antipatinage.

22. Installation de freinage, qui comprend un appareil (60) électronique de commande suivant l'une des revendications précédentes.

23. Procédé de commande d'une installation de freinage pour un véhicule utilitaire pouvant être accouplé à une remorque, comprenant
- un cylindre (400) de frein de service et un cylindre (402) de frein à ressort accumulateur pour freiner le véhicule utilitaire,
- un appareil (60) électronique de commande,
- des capteurs (220, 30, 230) de détection de l'état de déplacement du véhicule utilitaire,
- une vanne (430) de frein au pied pour actionner le frein de service,
- une unité (22) manuelle de commande, par laquelle des souhaits du conducteur, qui dépendent du type d'actionnement de l'unité (22) manuelle de commande, peuvent être transmis à l'appareil (60) électronique de commande,
- un module (62) ayant des vannes, qui peuvent être commandées électriquement, pour un système d'antiblocage et un module (64), ayant des vannes, qui peuvent être commandées électriquement, pour un frein de stationnement commandé électriquement, ayant une vanne de commande de remorque pour le raccordement d'une remorque, les modules (62, 64) étant reliés à l'appareil (60) de commande,
- dans lequel l'appareil (60) électronique de commande prend en charge à la fois l'influence sur le système d'antiblocage et sur le frein de stationnement commandé électriquement,
**caractérisé en ce que** le module (62), ayant des vannes pouvant être commandées électriquement, pour le système d'antiblocage et le module (64), ayant des vannes pouvant être commandées électriquement, pour le frein de stationnement commandé électriquement utilisent au moins en partie des entrées et des sorties d'air comprimé communes et **en ce que**, si le système d'antiblocage est défectueux, le fonctionnement du système d'antiblocage est désactivé séparément du fonctionnement du frein de stationnement commandé électriquement et **en ce que**, si le frein de stationnement commandé électroniquement est défectueux, le fonctionnement du frein de stationnement commandé électriquement est désactivé séparément du fonctionnement du système d'antiblocage, **en ce que** l'appareil (60) de commande comprend des micro-unités (208, 210) de commande, une minuterie (212) de surveillance et deux relais (214, 216) distincts pour désactiver séparément le système d'antiblocage et le frein de stationnement commandé électriquement, **en ce que** l'appareil (60) de commande comprend, en outre, une mémoire (206) d'écriture/lecture pour mémoriser les paramètres de commande et de régulation admissibles, ainsi que des valeurs de seuil données à l'avance, et **en ce que** la minuterie (212) de surveillance exécute une fonction de minuterie de surveillance qui contrôle les micro-unités (208, 210) de commande et, en cas de défaut, les met partiellement hors circuit et **en ce que** l'appareil (60) de commande fait débuter, en utilisant le module (64) pour le frein de stationnement commandé électriquement et notamment le raccord (120) de commande présent, un freinage de maintien en ligne commandé et contrôle si un freinage de maintien en ligne est demandé.
